(19) Europäisches Patentamt / European Patent Office / Office européen des brevets

(11) **EP 3 615 893 B1**

(12) **EUROPÄISCHE PATENTSCHRIFT**

(45) Veröffentlichungstag und Bekanntmachung des Hinweises auf die Patenterteilung:
**12.04.2023 Patentblatt 2023/15**

(21) Anmeldenummer: **18720207.2**

(22) Anmeldetag: **23.04.2018**

(51) Internationale Patentklassifikation (IPC):
***B62D 15/02*** (2006.01)   ***G01D 5/04*** (2006.01)
***G01D 5/14*** (2006.01)

(52) Gemeinsame Patentklassifikation (CPC):
**B62D 15/0215; G01D 5/04; G01D 5/145;**
G01D 2205/26

(86) Internationale Anmeldenummer:
**PCT/EP2018/060261**

(87) Internationale Veröffentlichungsnummer:
**WO 2018/197372 (01.11.2018 Gazette 2018/44)**

(54) **ERMITTELN EINES DREHWINKELS EINER LENKWELLE MITTELS DREIER ZAHNRÄDER**

DETERMINING A ROTATIONAL ANGLE OF A STEERING SHAFT BY MEANS OF THREE GEAR WHEELS

DÉTERMINATION D'UN ANGLE DE ROTATION D'UN ARBRE DE DIRECTION AU MOYEN DE TROIS ROUES DENTÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2017 DE 102017108863**

(43) Veröffentlichungstag der Anmeldung:
**04.03.2020 Patentblatt 2020/10**

(73) Patentinhaber: **Valeo Schalter und Sensoren GmbH**
**74321 Bietigheim-Bissingen (DE)**

(72) Erfinder: **TANDJEU-TCHUISSI, Landry**
**74321 Bietigheim-Bissingen (DE)**

(74) Vertreter: **Pothmann, Karsten**
**Valeo Schalter und Sensoren GmbH**
**CDA-IP**
**Laiernstraße 12**
**74321 Bietigheim-Bissingen (DE)**

(56) Entgegenhaltungen:
| | |
|---|---|
| EP-A1- 2 259 016 | EP-A1- 2 789 967 |
| EP-A2- 1 193 472 | EP-A2- 1 777 484 |
| DE-A1- 19 821 467 | DE-A1- 19 941 101 |

EP 3 615 893 B1

**Beschreibung**

Die Erfindung betrifft ein Verfahren zum Ermitteln eines Drehwinkels einer Lenkwelle, wobei aus jeweiligen Drehwinkeln mehrerer Zahnräder der Drehwinkel der Lenkwelle ermittelt wird. Weitere Aspekte der Erfindung betreffen ein Steuergerät und eine Messanordnung zum Ermitteln eines Drehwinkels einer Lenkwelle. Ein vierter Aspekt der Erfindung betrifft ein Kraftfahrzeug mit der genannten Welle.

Aus dem Stand der Technik sind Verfahren zum Bestimmen eines Drehwinkels einer Lenkwelle bekannt. Beispielsweise treibt ein mit der Lenkwelle verbundenes Hauptrad zwei Nebenzahnräder mit unterschiedlichen Zahnanzahlen an. Ein jeweiliger Drehwinkel der zwei Nebenzahnräder kann mittels jeweiliger Winkelsensoren erfasst werden. Aus den beiden Drehwinkeln der Nebenzahnräder kann mittels des Nonius-Prinzips der Drehwinkel der Lenkwelle über mehrere Umdrehungen eindeutig bestimmt werden. Eine vergleichbare Anordnung ist beispielsweise aus der FR 269 70 81 A1 bekannt.

Beispielsweise sind $z1$, $z2$ die jeweiligen Zahnanzahlen der Nebenzahnräder Z1 und Z2, wobei $z1$ kleiner ist als $z2$ und $z1$ und $z2$ teilerfremd sind. Die Zahnanzahl des Hauptrades entspricht $l$. Ein detektierbarer Winkelbereich der Welle kann in diesem Beispiel $z1 \cdot z2 \cdot 360 \div l$ betragen. Je grösser $z1$ oder $z2$ sind, desto grösser ist der detektierbare Winkelbereich, aber desto genauer müssen die Winkelsensoren sein, um eine verringerte Genauigkeit zu vermeiden. Ist $g1$ die Genauigkeit eines ersten Winkelsensor S1 der die Bewegung des Nebenzahnrades Z1 erfasst, so ergibt sich eine Gesamtgenauigkeit G1 des Drehwinkels der Lenkwelle aus der Formel: $G1 = g1 \cdot z1 \div l$. Wie aus den Formeln hervorgeht, erhöht sich mit $z1 \div l$ der detektierbare Winkelbereich unter Verschlechterung der Genauigkeit. Dies gilt analog für das Nebenzahnrad Z2.

Die EP 1 193 472 A2 offenbart ein Verfahren und eine Vorrichtung zur Bestimmung der Absolutposition einer Welle mit zwei Sensoren, die im Messbereich sägezahnförmige Ausgangssignale mit einer um eine "1" verschiedene Anzahl von Perioden erzeugen. Dabei wird ein dritter Sensor verwendet, der im Messbereich ebenfalls ein sägezahnförmiges Ausgangssignal mit einer dritten Anzahl von Perioden erzeugt. Bei Ausfall des ersten oder zweiten Sensors wird ein Differenzsignal zwischen dem Ausgangssignal des verbliebenen funktionsfähigen Sensors und dem dritten Sensor gebildet.

Die DE 19 941 101 A1 offenbart eine Sensoranordnung zur Ermittlung eines Lenkwinkels eines Lenkrades in einem Kraftfahrzeug. Die Sensoranordnung umfasst drei Sensoreinheiten zum Ermitteln der Drehstellung des Lenkrades, die zum Erfassen der Drehstellung des Lenkrades nahe einem gemeinsam mit dem Lenkrad drehbaren Positionsgeber angeordnet sind und jeweils in Abhängigkeit von der Drehstellung des Lenkrades ein Sensorsignal ausgeben. Mit Hilfe einer Auswerteschaltung wird der Lenkwinkel des Lenkrades aus den Sensorsignalen der Sensoreinheiten ermittelt.

Die EP 2 743 662 A1 stellt eine Vorrichtung für ein Kraftfahrzeug bereit, die dazu ausgebildet ist, einen absoluten Drehwinkel einer Lenkwelle auch bei mehr als einer vollen Umdrehung eindeutig zu bestimmen. Dabei bildet eine erste Baugruppe, die zwei Zahnräder umfasst, einen Umdrehungssensor und eine zweite Baugruppe, die ein Zahnrad umfasst, dient der Feinbestimmung des Drehwinkels.

EP 1 777 484 A2, EP 2 789 967 A1, EP 2 259 016 A1 und DE 198 21 467 A1 offenbaren weitere bekannte Messeinrichtungen zum Ermitteln eines Drehwinkels einer Lenkwelle.

Der Stand der Technik besitzt den Nachteil, dass sich ein Umfang eines Winkelbereichs, innerhalb dessen der Drehwinkel der Lenkwelle eindeutig festgelegt ist, und eine Genauigkeit der Ermittlung des Drehwinkels der Lenkwelle gegenseitig einschränken.

Es ist Aufgabe der Erfindung, den Drehwinkel der Lenkwelle gegenüber dem Stand der Technik mit erhöhter Genauigkeit innerhalb eines größeren vorgegebenen Winkelbereichs eindeutig ermittelbar zu machen.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der abhängigen Ansprüche. Zweckmäßige Weiterbildungen des erfindungsgemäßen Verfahrens bilden analog auch die erfindungsgemäße Vorrichtung weiter und umgekehrt.

Bei dem vorliegenden Verfahren zum Ermitteln eines Drehwinkels einer Lenkwelle werden in einem ersten Schritt jeweilige Drehwinkel von drei Zahnrädern einer Zahnradanordnung erfasst, wobei die drei Zahnräder mit unterschiedlicher Zahnanzahl direkt mit einem Radkranz der Welle verzahnt sind. Beispielsweise werden die jeweiligen Drehwinkel durch einen jeweiligen Winkelsensor erfasst. Insbesondere werden drei Drehwinkel für jedes der drei Zahnräder erfasst. Insbesondere drehen sich die drei Zahnräder aufgrund der unterschiedlichen Zahnanzahl bei einem Drehen der Welle mit jeweils unterschiedlicher Winkelgeschwindigkeit. Direkt verzahnt bedeutet insbesondere, dass jeweilige Zähne jedes der drei Zahnräder direkt in Zähne des Radkranzes der Welle greift.

In einem zweiten Schritt wird der Drehwinkel der Lenkwelle anhand der jeweiligen Drehwinkel der drei Zahnräder nach einer vorbestimmten Extraktionsvorschrift ermittelt, wobei durch die Gesamtheit der jeweiligen Drehwinkel der Drehwinkel der Lenkwelle innerhalb eines vorgegebenen Winkelbereichs eindeutig festgelegt ist. Der vorgegebene Winkelbereich umfasst insbesondere mehrere vollständige Umdrehungen der Welle. Die drei jeweiligen Drehwinkel der drei Zahnräder können als Tupel, insbesondere als Tripel, aufgefasst werden. Durch die Gesamtheit der jeweiligen Drehwinkel beziehungsweise durch den Tupel kann der Welle innerhalb des vorgegebenen Winkelbereichs der Drehwinkel der Lenkwelle eindeutig zugeordnet werden. Das Zuordnen des Drehwinkels der Lenkwelle in Abhängigkeit von der Gesamtheit der jeweiligen Drehwinkel und/oder in Abhängigkeit von dem Tupel kann beispielsweise anhand einer Wertetabelle erfolgen. Somit kann die vorbestimmte Extraktionsvorschrift umfassen, dass der Drehwinkel der Lenkwelle anhand der Gesamtheit der jeweiligen Drehwinkel aus der Wertetabelle ermittelt wird.

Der Drehwinkel der Lenkwelle kann über mehrere Umdrehungen hinweg gemessen werden. Beispielsweise liegt der Drehwinkel der Lenkwelle zwischen 0 Grad und einem Vielfachen von 360 Grad, beispielsweise 3600 Grad, was 10 vollen Umdrehungen entspricht. Die jeweiligen Drehwinkel der drei Zahnräder sind insbesondere auf die momentane Umdrehung des jeweiligen Zahnrades bezogen. Somit liegen die Drehwinkel der drei Zahnräder vorzugsweise stets in einem Bereich zwischen 0 Grad und 360 Grad.

Erfindungsgemäß ist vorgesehen, dass die vorbestimmte Extraktionsvorschrift umfasst, dass innerhalb der drei Zahnräder zwei verschiedene Zahnradpaarungen ausgewählt werden, wobei ein erstes Zahnrad der drei Zahnräder in beiden der zwei Zahnradpaarungen enthalten ist. Dabei ist mittels der jeweiligen Drehwinkel der zwei Zahnradpaarungen eine Anzahl vollständiger Umdrehungen des ersten Zahnrads in einem jeweiligen Teilwinkelbereich eindeutig ermittelbar. Beispielsweise umfasst eine erste Zahnradpaarung aus den zwei Zahnradradpaarungen das erste Zahnrad und ein zweites Zahnrad der drei Zahnräder und eine zweite Zahnradpaarungen aus den zwei Zahnradpaarungen das erste Zahnrad und ein drittes Zahnrad aus den drei Zahnrädern. Durch einen ersten Drehwinkel des ersten Zahnrads und einen zweiten Drehwinkel des zweiten Zahnrads kann die Anzahl vollständiger Umdrehungen des ersten Zahnrads in einem ersten Teilwinkelbereich der ersten Zahnradpaarung eindeutig ermittelbar sein. Durch den ersten Drehwinkel des ersten Zahnrads und einen dritten Drehwinkel des dritten Zahnrads kann die Anzahl vollständiger Umdrehungen des ersten Zahnrads in einem zweiten Teilwinkelbereich der zweiten Zahnradpaarung eindeutig ermittelbar sein. Durch Auswählen der zwei Zahnradpaarungen kann die Anzahl vollständiger Umdrehungen des ersten Zahnrads besonders leicht ermittelt werden, da in diesem Fall für die jeweiligen Zahnradpaarungen eine aus dem Stand der Technik bekannte Extraktionsvorschrift zum Ermitteln des Drehwinkels der Lenkwelle anhand von zwei Zahnrädern ermittelt werden kann. Die Anzahl vollständiger Umdrehungen eines Zahnrads gibt insbesondere an, wie viele Umdrehungen von jeweils 360 Grad das jeweilige Zahnrad von einer Nulllage ausgehend eingedreht ist. Beispielsweise entspricht die Anzahl vollständiger Umdrehungen eines Zahnrads einem Absolutwinkel des jeweiligen Zahnrads, der insbesondere den Winkel des Zahnrades bezüglich der Nulllage über mehrere Umdrehungen hinweg angibt, geteilt durch 360 Grad.

Erfindungsgemäß ist vorgesehen, dass ein erster Wert für die Anzahl vollständiger Umdrehungen des ersten Zahnrads aus den jeweiligen Drehwinkeln der Zahnräder der ersten Zahnradpaarung aus den beiden Zahnradpaarungen ermittelt wird und ein zweiter Wert für die Anzahl vollständiger Umdrehungen des ersten Zahnrads aus den jeweiligen Drehwinkeln der Zahnräder der zweiten Zahnradpaarung aus den beiden Zahnradpaarungen ermittelt wird. Der erste Wert und der zweite Wert für die Anzahl vollständiger Umdrehungen des ersten Zahnrads können gleich sein oder voneinander abweichen. Insbesondere weichen der erste Wert und der zweite Wert, insbesondere nur, dann voneinander ab, wenn die Anzahl vollständiger Umdrehungen des ersten Zahnrads außerhalb eines oder außerhalb beider der jeweiligen Teilwinkelbereiche liegt. In diesem Fall ist die Anzahl vollständiger Umdrehungen des ersten Zahnrads durch die Zahnradpaarungen einzeln nicht eindeutig bestimmbar. Insbesondere kann der erste Wert für die Anzahl vollständiger Umdrehungen des ersten Zahnrads aus dem ersten Drehwinkel und dem zweiten Drehwinkel ermittelt werden. Insbesondere kann der zweite Wert für die Anzahl vollständiger Umdrehungen des ersten Zahnrads aus dem ersten Drehwinkel und dem dritten Drehwinkel ermittelt werden.

Eine Weiterbildung sieht vor, dass der erste Wert und der zweite Wert für die Anzahl vollständiger Umdrehungen des ersten Zahnrads jeweils mittels des Nonius-Prinzips ermittelt werden. Insbesondere wird der erste Wert für die Anzahl vollständiger Umdrehungen des ersten Zahnrads für die erste Zahnradpaarung mittels des Nonius-Prinzips ermittelt. Vorzugsweise wird der zweite Wert für die Anzahl vollständiger Umdrehungen des ersten Zahnrads für die zweite Zahnradpaarung mittels des Nonius-Prinzips ermittelt. Durch das Nonius-Prinzip ist eine einfache und eindeutige Extraktionsvorschrift bereitgestellt, um den ersten Wert und den zweiten Wert für die Anzahl vollständiger Umdrehungen des ersten Zahnrads für die jeweilige Zahnradpaarung zu ermitteln.

Erfindungsgemäß ist vorgesehen, dass zu dem ersten Wert und ein erster vorbestimmter Additionswert addiert wird, wenn der erste Wert kleiner ist als der zweite Wert, und zu dem zweiten Wert ein zweiter vorbestimmter Additionswert addiert wird, wenn der zweite Wert kleiner ist als der erste Wert, und die jeweiligen vorbestimmten Additionswerte iterativ zu dem ersten Wert und dem zweiten Wert addiert werden, bis der erste Wert und der zweite Wert übereinstimmen. Vorzugsweise wird der erste/zweite Wert durch Addieren des ersten/zweiten vorbestimmten Additionswerts im Rahmen einer Iterationsschleife verändert. Vorzugsweise sieht die Iterationsschleife vor, dass zu dem jeweils kleineren der beiden Werte der jeweilige vorbestimmte Additionswert addiert wird. Insbesondere wird bei jedem Iterationsschritt überprüft, welcher der beiden Werte in dem momentanen Iterationsschritt kleiner als der andere ist. Die Iterationsschleife kann gestoppt werden, sobald der erste Wert und der zweite Wert übereinstimmen.

Eine Weiterbildung sieht vor, dass der erste und der zweite vorbestimmte Additionswert eine Spanne des jeweiligen Teilwinkelbereichs betrifft, innerhalb dessen mit der ersten beziehungsweise der zweiten Zahnradpaarung die Anzahl vollständiger Umdrehungen des ersten Zahnrads eindeutig ermittelbar ist. Insbesondere gibt der erste Additionswert eine Spanne des Teilwinkelbereichs an, innerhalb dessen mit der ersten Zahnradpaarung die Anzahl vollständiger Umdrehungen des ersten Zahnrads eindeutig ermittelbar ist. Alternativ oder zusätzlich gibt der zweite vorbestimmte Additionswert eine Spanne des Teilwinkelbereichs an, innerhalb dessen mit der zweiten Zahnradpaarung die Anzahl vollständiger Umdrehungen des ersten Zahnrads eindeutig ermittelbar ist. Vorzugsweise entspricht der jeweilige vorbestimmte Additionswert einer Anzahl vollständiger Umdrehungen des ersten Zahnrads, die das erste Zahnrad innerhalb des Teilwinkelbereichs der ersten Zahnradpaarung eindeutig ausführen kann. Beispielsweise entspricht der zweite vorbestimmte Additionswert einer Anzahl vollständiger Umdrehungen des ersten Zahnrads, die das erste Zahnrad innerhalb des Teilwinkelbereichs der zweiten Zahnradpaarung eindeutig durchführen kann.

Eine Weiterbildung sieht vor, dass der erste Wert und/oder der zweite Wert nur dann als die Anzahl vollständiger Umdrehungen des ersten Zahnrads festgelegt werden, wenn der erste Wert und der zweite Wert übereinstimmen. Beispielsweise stimmen der erste Wert und der zweite Wert direkt nach dem Ermitteln der jeweiligen Werte aus den jeweiligen Drehwinkeln der Zahnräder der jeweiligen Zahnradpaarung überein. In diesem Fall kann die Anzahl vollständiger Umdrehungen des ersten Zahnrads innerhalb des jeweiligen Teilwinkelbereichs beider Zahnradpaarungen liegen. Beispielsweise stimmen der erste Wert und der zweite Wert nach dem iterativen Addieren der jeweiligen vorbestimmten Additionswerte überein. In beiden Fällen können der erste und/oder der zweite Wert für die Anzahl vollständiger Umdrehungen des ersten Zahnrades der tatsächlichen Anzahl vollständiger Umdrehungen des ersten Zahnrades entsprechen. Somit ist die Anzahl vollständiger Umdrehungen des ersten Zahnrads aus der ersten Zahnradpaarung und der zweiten Zahnradpaarung eindeutig ermittelt.

Eine Weiterbildung sieht vor, dass der Drehwinkel des ersten Zahnrads und die Anzahl vollständiger Umdrehungen des ersten Zahnrads zu einem Gesamtwinkel des ersten Zahnrads zusammengefasst werden und aus dem Gesamtwinkel des ersten Zahnrads der Drehwinkel der Lenkwelle ermittelt wird. Beispielsweise wird die Anzahl vollständiger Umdrehungen des ersten Zahnrads mit 360 Grad multipliziert und anschließend der Drehwinkel des ersten Zahnrads addiert, um den Gesamtwinkel des ersten Zahnrads zu bilden. Der Gesamtwinkel des ersten Zahnrads kann in einem vorbestimmten Verhältnis zu dem Drehwinkel der Lenkwelle stehen. Unter Ausnutzung des vorbestimmten Verhältnisses kann der Drehwinkel der Lenkwelle aus dem Gesamtwinkel des ersten Zahnrads ermittelt werden.

Eine Weiterbildung der Erfindung sieht vor, dass als das erste Zahnrad dasjenige Zahnrad ausgewählt wird, welches die kleinste Zahnanzahl unter den drei Zahnrädern aufweist. Insbesondere wird als das erste Zahnrad dasjenige Zahnrad ausgewählt, dessen Zahnanzahl verglichen mit den anderen der drei Zahnräder am kleinsten ist. Insbesondere weisen das zweite Zahnrad und das dritte Zahnrad jeweils eine Zahnanzahl auf, die größer ist als die Zahnanzahl des ersten Zahnrads.

Eine Weiterbildung sieht vor, dass eine Plausibilität des Drehwinkels der Lenkwelle durch Vergleichen des ermittelten Drehwinkels der Lenkwelle mit einem vorgegebenen Drehwinkelbereich überprüft wird, wobei der vorgegebene Winkelbereich mindestens um den Faktor 2 größer ist als der vorgegebene Drehwinkelbereich, innerhalb dessen die Welle bewegbar ist. In anderen Ausführungsformen kann der vorgegebene Winkelbereich mindestens um den Faktor 3, 4, 5, 8, 10, 15, 20 oder 50 größer sein als der vorgegebene Drehwinkelbereich, innerhalb dessen die Welle bewegbar ist. Mit anderen Worten ist der Winkelbereich, innerhalb dessen der Drehwinkel der Lenkwelle durch die Gesamtheit der jeweiligen Drehwinkel der drei Zahnräder eindeutig festgelegt ist, zumindest um den jeweiligen Faktor größer als der vorgegebene Drehwinkelbereich, innerhalb dessen die Welle tatsächlich bewegbar ist. Liegt der ermittelte Drehwinkel der Lenkwelle außerhalb des vorgegebenen Drehwinkelbereichs, so kann darauf geschlossen werden, dass der Drehwinkel der Lenkwelle fehlerhaft ermittelt wurde. In diesem Fall ist der ermittelte Drehwinkel der Lenkwelle nicht plausibel. Umso größer der Faktor ist, um den der vorgegebene Winkelbereich größer ist, als der vorgegebene Drehwinkelbereich, umso größer ist die Wahrscheinlichkeit, dass der ermittelte Drehwinkel der Lenkwelle bei einer fehlerhaften Ermittlung dessen außerhalb des vorgegebenen Drehwinkelbereichs liegt. Somit können Fehler bei der Ermittlung des Drehwinkels der Lenkwelle besonders sicher erkannt werden. Diese Möglichkeit der Erkennung der Plausibilität ist erst durch den gegenüber dem Stand der Technik größeren vorgegebenen Winkelbereich möglich, in dem der Drehwinkel der Lenkwelle eindeutig messbar ist.

Zur vorliegenden Erfindung gehört außerdem ein Steuergerät zum Ermitteln eines Drehwinkels der Lenkwelle, welches dazu eingerichtet ist, ein Verfahren nach einem der vorhergehenden Ansprüche durchzuführen. Insbesondere weist das Steuergerät eine Empfangseinheit zum Erfassen der jeweiligen Drehwinkel der drei Zahnräder aus drei Winkelsensoren auf.

Ein dritter Aspekt der Erfindung betrifft eine Messanordnung zum Ermitteln eines Drehwinkels der Lenkwelle. Die Messanordnung umfasst einen an der Welle anordenbaren Radkranz, eine Zahnradanordnung umfassend drei Zahnräder, welche mit unterschiedlicher Übersetzung in einer mechanischen Wirkverbindung mit dem Radkranz stehen und zwei Winkelsensoren zum Erfassen eines jeweiligen Drehwinkels von einem ersten und einem zweiten der drei Zahnräder.

Um den Drehwinkel der Lenkwelle gegenüber dem Stand der Technik mit erhöhter Genauigkeit innerhalb eines größeren vorgegebenen Winkelbereichs eindeutig ermittelbar zu machen, umfasst die Messanordnung einen dritten Winkelsensor zum Erfassen eines dritten Drehwinkels eines dritten der drei Zahnräder. Außerdem ist jedes der drei Zahnräder mit unterschiedlicher Zahnanzahl direkt mit dem Radkranz verzahnt.

Eine Weiterbildung der Messanordnung sieht vor, dass diese außerdem das oben genannte Steuergerät umfasst. Die Winkelsensoren können dazu ausgebildet sein, den jeweiligen erfassten Drehwinkel an die Empfangseinheit des Steuergeräts zu übermitteln.

Die Messanordnung kann Teil einer Lenkeinrichtung sein, wobei der Radkranz an einer Lenkwelle der Lenkeinrichtung angeordnet ist. Insbesondere weist der Radkranz eine

Außenverzahnung auf. Vorzugsweise ist der Radkranz rotationssymmetrisch bezüglich einer Rotationsachse der Lenkwelle an der Lenkwelle angeordnet. Insbesondere ist die Lenkwelle als Lenkwelle eines Fahrzeugs ausgebildet. In diesem Fall kann aus dem Drehwinkel der Lenkwelle ein Lenkwinkel des Fahrzeugs ermittelt werden.

Die Messanordnung kann Teil einer Fahrerassistenzeinrichtung sein, die dazu eingerichtet ist, ein Verfahren zum Ermitteln eines Drehwinkels einer Lenkwelle der oben genannten Art durchzuführen. Beispielsweise umfasst die Fahrerassistenzeinrichtung ein elektronisches Stabilitätsprogramm, kurz ESP, welches den Drehwinkel der Lenkwelle des Fahrzeugs als Eingangsgröße erfordert.

Zu der Erfindung gehört außerdem ein Kraftfahrzeug mit der zuvor genannten Messanordnung. Insbesondere ist die Lenkwelle als Lenkwelle des Kraftfahrzeugs ausgebildet. Vorzugsweise ist der Drehwinkel der Lenkwelle mit einem Einschlagwinkel von Rädern des Kraftfahrzeugs verknüpft. In diesem Fall kann von dem Drehwinkel der Lenkwelle auf den Einschlagwinkel der Räder geschlossen werden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen, wobei der Umfang der Erfindung durch die Ansprüche definiert wird.

Dabei zeigen:

Fig. 1   in einer schematischen Seitenansicht ein Fahrzeug mit einer Lenkwelle und einer Messanordnung zum Ermitteln eines Drehwinkels der Lenkwelle;

Fig. 2   die Messanordnung in einem Schnitt durch die Lenkwelle;

Fig. 3   einen graphischen mit den durch drei Zahnradpaarungen ermittelten Drehwinkel einer Lenkwelle für mehrere tatsächliche Drehwinkel der Lenkwelle; und

Fig. 4   ein beispielhaftes Flussdiagramm eines Verfahrens zum Ermitteln eines Drehwinkels einer Lenkwelle.

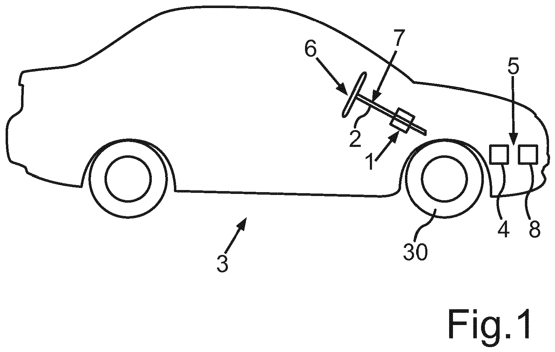

Fig. 1 zeigt in einer schematischen Seitenansicht ein Fahrzeug 3, insbesondere ein Kraftfahrzeug, vorzugsweise einen Kraftwagen, beispielsweise einen Personenkraftwagen oder einen Lastkraftwagen. Das Fahrzeug 3 weist vorliegend eines oder mehrere lenkbare Räder 30 auf, insbesondere zwei Vorderräder des Fahrzeugs 3. Ein Einschlagwinkel des lenkbaren Rads 30 beziehungsweise der lenkbaren Räder 30 ist insbesondere mittels einer Lenkeinrichtung 7 steuerbar. Vorliegend umfasst die Lenkeinrichtung 7 ein Lenkrad 6, welches durch einen Fahrer des Fahrzeugs 3 drehbar ist, und eine Lenkwelle 2, die vorliegend als Lenkwelle des Fahrzeugs 3 ausgebildet ist. An der Lenkwelle 2 ist eine Messanordnung 1 zum Ermitteln eines Drehwinkels E der Lenkwelle 2 angeordnet. Der Drehwinkel E der Lenkwelle 2 kann mit dem Einschlagwinkel des lenkbaren Rades 30 in einem direkten Zusammenhang stehen, beispielsweise über einen Proportionalitätsfaktor. Die Messanordnung 1 umfasst vorliegend außerdem ein Steuergerät 4, welches dazu eingerichtet ist, ein Verfahren zum Ermitteln des Drehwinkels E der Lenkwelle 2 durchzuführen. Die Messanordnung 1 kann durch Fahrerassistenzsystem 5 umfasst sein. Beispielsweise umfasst das Fahrerassistenzsystem 5 ein weiteres Steuergerät 8 zum Bereitstellen einer Fahrerassistenzfunktion. Bei der Fahrerassistenzfunktion handelt es sich beispielsweise um ein elektronisches Stabilitätsprogramm, kurz ESP, eine Servolenkung oder eine Aktivlenkung, die eine Lenkunterstützung in Abhängigkeit von dem Drehwinkel E der Lenkwelle 2 bereitstellt.

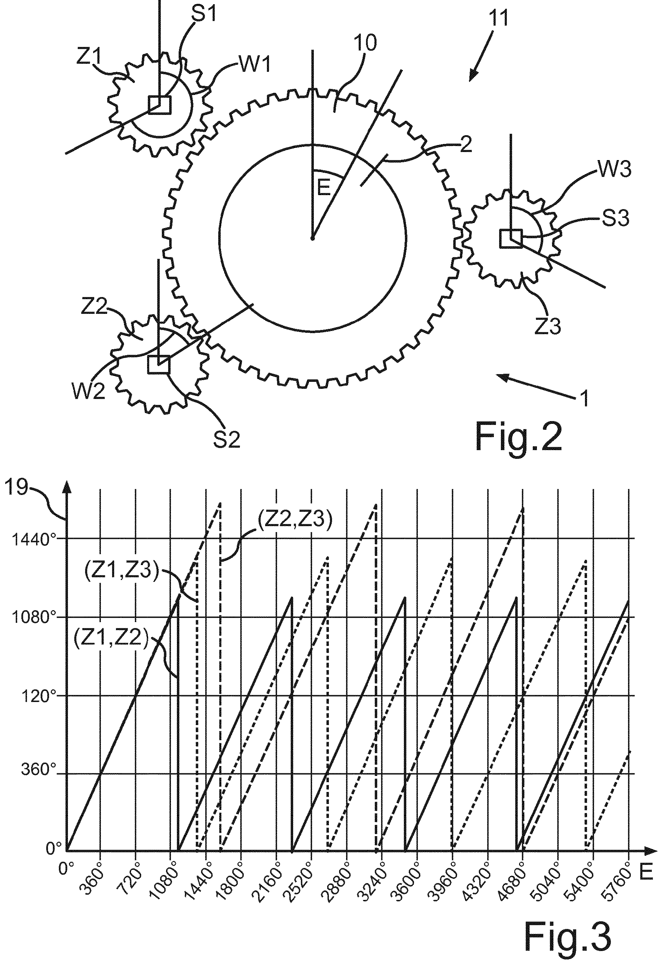

Fig. 2 zeigt die Messanordnung 1 in einem Querschnitt durch die Welle 2. Das Steuergerät 4 ist in der Fig. 2 nicht gezeigt. An der Welle 2 ist ein Radkranz 10 angeordnet. Der Radkranz 10 ist nach Art eines Zahnrades, vorzugsweise nach Art eines Stirnrades, ausgeführt. Radial außenliegend weist der Radkranz 10 Zähne auf, wobei eine Zahnanzahl I des Radkranzes 10 die Anzahl an Zähnen des Radkranzes 10 angibt. Der Radkranz 10 ist vorliegend direkt verzahnt mit drei weiteren Zahnrädern Z1, Z2, Z3. Jedes der drei Zahnräder Z1, Z2, Z3 weist radial außenseitig Zähne mit einer jeweiligen Zahnanzahl auf. Insbesondere sind die drei Zahnräder Z1, Z2, Z3 als Stirnräder ausgebildet. Die drei Zahnräder Z1, Z2, Z3 sind direkt mit dem Radkranz 10 verzahnt, wobei direkt insbesondere bedeutet, dass zumindest ein jeweiliger Zahn jedes der drei Zahnräder Z1, Z2, Z3 in Eingriff mit einem jeweiligen Zahn des Radkranzes 10 steht. Vorzugsweise sind die drei Zahnräder Z1, Z2, Z3 unabhängig voneinander mit dem Radkranz 10 verzahnt. Die drei Zahnräder Z1, Z2, Z3 bilden zusammen mit dem Radkranz 10 eine Zahnradanordnung 11 aus.

Jedem der drei Zahnräder Z1, Z2, Z3 ist ein jeweiliger Winkelsensor S1, S2, S3 zugeordnet. Beispielsweise sind die Winkelsensoren S1, S2, S3 an dem jeweiligen Zahnrad Z1, Z2, Z3 angeordnet. Ein erster Winkelsensor S1 kann dazu ausgebildet sein, einen ersten Drehwinkel W1 eines ersten Zahnrads Z1 zu erfassen. Ein zweiter Winkelsensor S2 kann dazu ausgebildet sein, einen zweiten Drehwinkel W2 eines zweiten Zahnrads Z2 zu erfassen. Ein dritter Winkelsensor S3 kann dazu ausgebildet sein, einen dritten Drehwinkel W3 eines dritten Zahnrads Z3 zu erfassen. Durch die jeweiligen Drehwinkel W1, W2, W3 der drei Zahnräder Z1, Z2, Z3 ist der Drehwinkel E der Lenkwelle 2 eindeutig festgelegt. Die drei Drehwinkel W1, W2, W3 geben insbesondere den aktuellen Winkel des jeweiligen Zahnrads Z1, Z2, Z3 in Bezug auf eine Nulllage an. Der Wertebereich der drei Drehwinkel W1, W2, W3 liegt dabei insbesondere bei 0 Grad bis 360 Grad. Der Drehwinkel E der Lenkwelle 2 ist demgegenüber über mehrere vollständige Umdrehungen hinweg ermittelbar. Der in der Fig. 2 gezeigte Drehwinkel E der Lenkwelle 2 kann demnach beispielsweise 30 Grad, 390 Grad oder 750 Grad entsprechen. Die jeweilige Zahnanzahl der drei Zahnräder Z1, Z2, Z3 ist jeweils unterschiedlich. Mit anderen Worten weist vorzugsweise jedes der drei Zahnräder Z1, Z2, Z3 eine unterschiedliche Zahnanzahl auf. Beispielsweise ist eine Zahnanzahl $z2$ des zweiten Zahnrads Z2 größer als eine Zahnanzahl $z1$ des ersten Zahnrads Z1. Beispielsweise ist eine Zahnanzahl $z3$ des dritten Zahnrads Z3 größer als die Zahnanzahl Z2 des zweiten Zahnrads Z2.

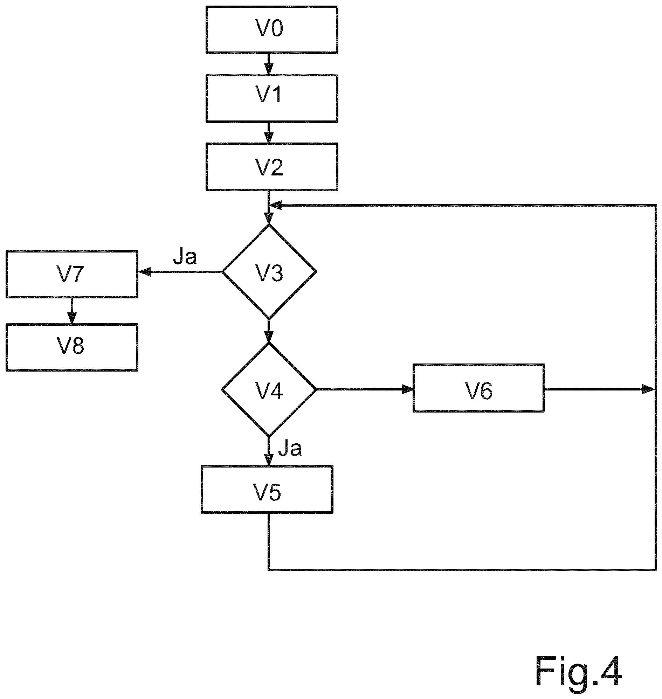

Fig. 4 zeigt in einem Flussdiagramm eine beispielhafte Abfolge von Verfahrensschritten eines Verfahrens zum Ermitteln des Drehwinkels E der Lenkwelle 2. Vorzugsweise ist das Steuergerät 4 dazu eingerichtet, einen, mehrere oder alle der im Folgenden erläuterten Verfahrensschritte durchzuführen. In einem Schritt V0 werden innerhalb der drei Zahnräder Z1, Z2, Z3 zwei verschiedene Zahnradpaarungen (Z1, Z2 und Z1, Z3) ausgewählt. Das erste Zahnrad Z1 ist dabei insbesondere in beiden der Zahnradpaarungen (Z1, Z2), (Z1, Z3) enthalten. Beispielsweise enthält die erste Zahnradpaarung (Z1, Z2) das erste Zahnrad Z1 und das zweite Zahnrad Z2. Beispielsweise enthält die zweite Zahnradpaarung (Z1, Z3) das erste Zahnrad Z1 und das dritte Zahnrad Z3.

In einem Schritt V1 wird, insbesondere mittels eines Noniusalgorithmus, eine Anzahl U1 vollständiger Umdrehungen des ersten Zahnrads Z1 aus der ersten Zahnradpaarung (Z1, Z2) ermittelt. Hierzu kann folgende Formel 1 angewendet werden, wobei A1 eine Anzahl A1 vollständiger Umdrehungen des zweiten Zahnrads Z2 aus der ersten Zahnradpaarung (Z1, Z2) angibt:

$$z1 \cdot U1 - z2 \cdot A1 = (z2 \cdot W2 - z1 \cdot W1) \div 360° \qquad \text{Formel 1}$$

Für die oben genannte Formel 1 wird eine Lösung gesucht, die größer als 0 und kleiner als $z2$ ist. Mit dieser Nebenbedingung ist die Formel 1 trotz des Vorkommens zweier Unbekannter (U1, A1) eindeutig lösbar. Insbesondere ist die Anzahl U1 vollständiger Umdrehungen des ersten Zahnrads Z1 aus der ersten Zahnradpaarung (Z1, Z2) eindeutig ermittelbar, wenn diese größer als 0 und kleiner als $z2$ ist. Die Anzahl vollständiger Umdrehungen eines Zahnrads Z1, Z1, Z3 gibt insbesondere an, wie viele Umdrehungen von jeweils 360 Grad das jeweilige Zahnrad ausgehend von einer Nulllage eingedreht ist. Beispielsweise entspricht die Anzahl vollständiger Umdrehungen eines Zahnrads einem Absolutwinkel, der insbesondere den Winkel des jeweiligen Zahnrades bezüglich der Nulllage über mehrere Umdrehungen hinweg angibt, des jeweiligen Zahnrads geteilt durch 360 Grad. Durch Formel 1 ist die Anzahl vollständiger Umdrehungen in einem Teilwinkelbereich, der beispielsweise $z2 \cdot 360°$ entspricht, ermittelbar.

In einem Schritt V2 wird, insbesondere mittels eines Noniusalgorithmus, eine Anzahl U2 vollständiger Umdrehungen des ersten Zahnrads Z1 aus der zweiten Zahnradpaarung (Z1, Z3) ermittelt. Hierzu kann folgende Formel 2 angewendet werden, wobei A2 eine Anzahl A2 vollständiger Umdrehungen des dritten Zahnrads Z3 aus der zweiten Zahnradpaarung (Z1, Z3) angibt:

$$z1 \cdot U2 - z3 \cdot A2 = (z3 \cdot W3 - z1 \cdot W1) \div 360 \qquad \text{Formel 2}$$

Für die oben genannte Formel 2 wird eine Lösung gesucht, die größer als 0 und kleiner als $z3$ ist. Mit dieser Nebenbedingung ist die Formel 2 trotz des Vorkommens zweier Unbekannter (U2, A2) eindeutig lösbar. Insbesondere ist die Anzahl U2 vollständiger Umdrehungen des ersten Zahnrads Z1 aus der zweiten Zahnradpaarung (Z1, Z3) eindeutig ermittelbar, wenn diese größer als 0 und kleiner als $z3$ ist. Durch Formel 2 ist die Anzahl vollständiger Umdrehungen in einem Teilwinkelbereich, der beispielsweise $z3 \cdot 360°$ entspricht, ermittelbar.

In einem dritten Schritt V3 wird überprüft, ob U1 und U2 gleich sind. Ist dies der Fall, wird das Verfahren in einem Schritt V7 weitergeführt. In dem Schritt V7 kann U1 und/oder U2 als die Anzahl U vollständiger Umdrehungen des Zahnrads Z1 festgelegt werden, wenn beide gleich sind.

In einem Schritt V4 kann überprüft werden, ob U1 größer ist als U2 oder ob U2 größer ist als U1. Abhängig von dem Ergebnis der Überprüfung wird das Verfahren entweder mit einem Schritt V5 oder einem Schritt V6 fortgesetzt. Vorliegend wird das Verfahren mit dem Schritt V5 fortgesetzt, wenn U1 größer ist als U2. Vorliegend wird das Verfahren mit dem Schritt V6 fortgesetzt, wenn U2 größer ist als U1.

In dem Schritt V5 wird zu U2 ein zweiter vorbestimmter Additionswert addiert, vorliegend z3. Es kann sich somit ein neuer Wert für U2 ergeben, nämlich vorliegend U2 = U2 + z3. In dem Schritt V6 wird zu U1 ein zweiter vorbestimmter Additionswert addiert, vorliegend z3. Es kann sich somit ein neuer Wert für U1 ergeben, nämlich vorliegend U1 = U1 + z2. Der erste und der zweite vorbestimmte Additionswert geben insbesondere die maximale Anzahl an Umdrehungen für das erste Zahnrad Z1 vor, die in den jeweiligen Teilwinkelbereichen der Zahnradpaarungen (Z1, Z2), (Z1, Z3) erfassbar ist. Anschließend wird das Verfahren mit dem Schritt V3 fortgesetzt, wobei sich der Wert für U1 oder U2 gegenüber der ersten Durchführung des Schrittes V3 geändert haben kann. Die Schritte V3 bis V6 können iterativ durchgeführt werden, bis U1 und U2 gleich sind. Insbesondere wird in den Schritten V5 und V6 iterativ solange der jeweilige Additionswert zu U1 und/oder U2 addiert, bis U1 und U2 gleich sind.

Durch das iterative Addieren kann die Anzahl U vollständiger Umdrehungen des Zahnrads Z1 über einen Winkelbereich ermittelt werden, der größer ist als die Teilwinkelbereiche der Zahnradpaarungen (Z1, Z2), (Z1, Z3). Die Anzahl U vollständiger Umdrehungen des Zahnrads Z1 kann über Formel 3 direkt mit dem Drehwinkel E der Lenkwelle 2 zusammenhängen:

$$E = (W1 + U \cdot 360°) \cdot \frac{z1}{l} \qquad \text{Formel 3}$$

Die Wahl der drei Zahnräder als Z1, Z2, Z3 ist nur beispielhaft zu verstehen. Insbesondere kann jeder der drei Zahnräder Z1, Z2, Z3 als erstes Zahnrad Z1 oder als zweites Zahnrad Z2 oder als drittes Zahnrad Z3 gewählt werden. Vorzugsweise wird dasjenige der Zahnräder Z1, Z2, Z3 als das erste Zahnrad Z1 im Sinne der obigen Formeln gewählt, welches die kleinste Zahnanzahl z1 aufweist. In diesem Fall kann eine Genauigkeit der Ermittlung des Drehwinkels E der Lenkwelle 2 erhöht werden.

Zum weiteren Erhöhung der Genauigkeit und/oder zum Erkennen von Messfehlern bei der Ermittlung des Drehwinkels E der Lenkwelle 2 können die Schritte V0 bis V7 für zwei oder mehr unterschiedliche Zahnradpaarungen unabhängig durchgeführt werden. Beispielhafte Zahnradpaarungen sind: (Z1,Z2) und (Z2,Z3) oder (Z1,Z3) und (Z2,Z3). Beispielsweise wird der Drehwinkel E der Lenkwelle 2 alternativ oder zusätzlich analog zu den Schritten V0 bis V7 aus den Zahnradpaarungen (Z1,Z3) und (Z2,Z3) ermittelt. Die Formeln sind dementsprechend an die Zahnradpaarungen (Z1,Z3) und (Z2,Z3) anzupassen. Die beiden unterschiedlich ermittelten Werte für den Drehwinkel E der Lenkwelle 2 können verglichen werden. Bei einem Abweichen der Werte kann auf einen Messfehler entschieden werden.

Fig. 3 zeigt einen Graphen mit den durch die drei Zahnradpaarungen (Z1,Z2), (Z2,Z3) und (Z1,Z3) ermittelten Drehwinkel 19 der Welle 2 für mehrere Drehwinkel E der Lenkwelle 2. Alle drei Graphen starten im Ursprung des Graphen und steigen mit zunehmendem Drehwinkel E der Lenkwelle 2 an. Sobald der Drehwinkel E einen jeweiligen Teilwinkelbereich einer der Zahnradpaarungen (Z1,Z2), (Z2,Z3), (Z1,Z3) verlässt, fällt der jeweilige Graph auf einen ermittelten Drehwinkel 19 von 0 Grad ab. Anhand einer einzelnen der Zahnradpaarungen (Z1,Z2), (Z2,Z3) und (Z1,Z3) sind daher beispielsweise die Drehwinkel E der Lenkwelle 2 von 360 Grad und 1800 Grad nicht unterscheidbar. Da die drei Zahnradpaarungen (Z1,Z2), (Z2,Z3) und (Z1,Z3) jedoch außerhalb der jeweiligen Teilwinkelbereiche unterschiedliche Werte für den Drehwinkel E der Lenkwelle 2 angeben, kann daraus auf den tatsächlichen Drehwinkel E der Lenkwelle 2 geschlossen werden. Die Schritte V0 bis V7 stellen somit ein Verfahren bereit, dass diese Erkenntnis nutzt und durch welches der Drehwinkel E der Lenkwelle 2 besonders leicht ermittelt werden kann.

Ein vorgegebener Winkelbereich, in dem der Drehwinkel E der Lenkwelle 2 eindeutig ermittelbar ist, kann auf einen vorgegebenen Faktor, insbesondere um den Faktor 2, 3, 4, 5, 8, 10, 15, 20 oder 50 als ein vorgegebener Drehwinkelbereich, innerhalb dessen die Lenkwelle 2 bewegbar ist. Dabei kann der vorgegebene Drehwinkelbereich beispielsweise sieben vollen Umdrehungen der Lenkwelle 2 beziehungsweise 2520 Grad entsprechen.

Der vorgegebene Winkelbereich, in dem der Drehwinkel E der Lenkwelle 2eindeutig ermittelbar ist, kann beispielsweise 10, 15, 20, 30, 50 oder 100 Umdrehungen der Lenkwelle 2 beziehungsweise 3600 Grad, 5400 Grad, 7200 Grad, 10800 Grad, 18000 Grad oder 36000 Grad entsprechen. Der ermittelte Drehwinkel E der Lenkwelle 2 kann mit einem vorgegebenen Drehwinkelbereich verglichen werden. Dabei wird insbesondere überprüft, ob der Drehwinkel E der Lenkwelle 2 plausibel ist. Liegt der ermittelte Drehwinkel E der Lenkwelle 2 außerhalb des vorgegebenen Drehwinkelbereichs, so kann darauf geschlossen werden, dass der Drehwinkel E der Lenkwelle 2 fehlerhaft ermittelt wurde. In diesem Fall ist der ermittelte Drehwinkel E nicht plausibel. Umso größer der Faktor ist, um den der vorgegebene Winkelbereich größer ist, als der vorgegebene Drehwinkelbereich, umso größer ist die Wahrscheinlichkeit, dass der ermittelte Drehwinkel E der Lenkwelle 2 bei einer fehlerhaften Ermittlung dessen außerhalb des vorgegebenen Drehwinkelbereichs liegt. Somit können Fehler bei der Ermittlung des Drehwinkels E besonders sicher erkannt werden. Diese Möglichkeit der Erkennung der Plausibilität ist insbesondere durch den gegenüber dem Stand der Technik größeren vorgegebenen Winkelbereich, in dem der Drehwinkel E der Lenkwelle 2 eindeutig messbar ist, ermöglicht.

**Patentansprüche**

1.  Verfahren zum Ermitteln eines Drehwinkels (E) einer Lenkwelle (2), mit den Schritten:

    - Erfassen jeweiliger Drehwinkel (W1, W2, W3) von drei Zahnrädern (Z1, Z2, Z3) einer Zahnradanordnung, wobei die drei Zahnräder (Z1, Z2, Z3) mit unterschiedlicher Zahnanzahl (z1, z2, z3) mit einem Radkranz (10) der Lenkwelle (2) verzahnt sind, und
    - Ermitteln des Drehwinkels (E) der Lenkwelle (2) anhand der jeweiligen Drehwinkel (W1, W2, W3) der drei Zahnräder (Z1, Z2, Z3) nach einer vorbestimmten Extraktionsvorschrift, wobei durch die Gesamtheit der jeweiligen Drehwinkel (W1, W2, W3) der Drehwinkel (E) der Lenkwelle (2) innerhalb eines vorgegebenen Winkelbereichs eindeutig festgelegt ist,

    wobei
    die vorbestimmte Extraktionsvorschrift umfasst, dass innerhalb der drei Zahnräder (Z1, Z2, Z3) zwei verschiedene Zahnradpaarungen (Z1,Z2), (Z1,Z3) ausgewählt werden (V0), wobei ein erstes Zahnrad (Z1) der drei Zahnräder (Z1, Z2, Z3) in beiden der zwei Zahnradpaarungen (Z1,Z2), (Z1,Z3) enthalten ist und wobei mittels der jeweiligen Drehwinkel (W1, W2, W3) der zwei Zahnradpaarungen (Z1,Z2), (Z1,Z3) eine Anzahl (U) vollständiger Umdrehungen des ersten Zahnrads (Z1) in einem jeweiligen Teilwinkelbereich eindeutig ermittelbar ist,
    **dadurch gekennzeichnet, dass**

    - ein erster Wert für die Anzahl (U1) vollständiger Umdrehungen des ersten Zahnrads (Z1) aus den jeweiligen Drehwinkeln (W1, W2) der Zahnräder (Z1, Z2) einer ersten Zahnradpaarung (Z1,Z2) aus den zwei Zahnradpaarungen (Z1,Z2), (Z1,Z3) ermittelt wird (V1), und
    - ein zweiter Wert für die Anzahl (U2) vollständiger Umdrehungen des ersten Zahnrads (Z1) aus den jeweiligen Drehwinkeln (W1, W3) der Zahnräder (Z2, Z3) einer zweiten Zahnradpaarung (Z1,Z3) aus den zwei Zahnradpaarungen (Z1,Z2), (Z1,Z3) ermittelt wird (V2), und wobei
    - zu dem ersten Wert (U1) ein erster vorbestimmter Additionswert addiert wird (V6), wenn der erste Wert (U1) kleiner ist als der zweite Wert (U2),
    - zu dem zweiten Wert (U2) ein zweiter vorbestimmter Additionswert addiert wird (V5), wenn der zweite Wert (U2) kleiner ist als der erste Wert (U1),
    - die jeweiligen vorbestimmten Additionswerte iterativ zu dem ersten Wert (U1) und dem zweiten Wert (2) addiert werden, bis der erste Wert (U1) und der zweite Wert (U2) übereinstimmen.

2.  Verfahren nach Anspruch 1,
    **dadurch gekennzeichnet, dass**
    der erste Wert (U1) und der zweite Wert (U2) für die Anzahl vollständiger Umdrehungen des ersten Zahnrads (Z1) jeweils mittels des Nonius-Prinzips ermittelt werden.

3.  Verfahren nach Anspruch 1,
    **dadurch gekennzeichnet, dass**,
    der erste und der zweite vorbestimmte Additionswert eine Spanne des jeweiligen Teilwinkelbereichs betreffen, innerhalb dessen mit der ersten beziehungsweise der zweiten Zahnradpaarung (Z1,Z2), (Z1,Z3) die Anzahl (U) vollständiger Umdrehungen des ersten Zahnrads eindeutig ermittelbar ist.

4.  Verfahren nach einem der Ansprüche 1 bis 3,
    **dadurch gekennzeichnet, dass**,
    der erste Wert (U1) und/oder der zweite Wert (U2) nur dann als die Anzahl vollständiger Umdrehungen des ersten Zahnrades (Z1) festgelegt werden (V7), wenn der erste Wert (U1) und der zweite Wert (U2) übereinstimmen.

5.  Verfahren nach einem der Ansprüche 1 bis 4,
    **dadurch gekennzeichnet, dass**,

    - der Drehwinkel (W1) des ersten Zahnrads (Z1) und die Anzahl (U) vollständiger Umdrehungen des ersten Zahnrads (Z1) zu einem Gesamtwinkel des ersten Zahnrads (Z1) zusammengefasst werden, und
    - aus dem Gesamtwinkel des ersten Zahnrads (Z1) der Drehwinkel (E) der Lenkwelle (2) ermittelt wird (V8).

6.  Verfahren nach einem der Ansprüche 1 bis 5,
    **dadurch gekennzeichnet, dass**,

als das erste Zahnrad (Z1) dasjenige Zahnrad ausgewählt wird, welches die kleinste Zahnanzahl (z1) unter den drei Zahnrädern (Z1, Z2, Z3) aufweist.

7. Verfahren nach einem der vorhergehenden Ansprüche,
**dadurch gekennzeichnet, dass**,
eine Plausibilität des Drehwinkels (E) der Lenkwelle (2) durch Vergleichen des ermittelten Drehwinkels (E) der Lenkwelle (2) mit einem vorgegebenen Drehwinkelbereich überprüft wird, wobei der vorgegebene Drehwinkelbereich mindestens um den Faktor 2 größer ist als der vorgegebene Drehwinkelbereich, innerhalb dessen die Lenkwelle (2) bewegbar ist.

8. Steuergerät zum Ermitteln eines Drehwinkels (E) einer Lenkwelle (2), welches dazu eingerichtet ist, ein Verfahren nach einem der vorhergehenden Ansprüche durchzuführen.

9. Messanordnung (1) zum Ermitteln eines Drehwinkels (E) einer Lenkwelle (2), mit

- einem an der Lenkwelle (2) anordenbaren Radkranz (10),
- einer Zahnradanordnung umfassend drei Zahnräder (Z1, Z2, Z3), welche mit unterschiedlicher Übersetzung in einer mechanischen Wirkverbindung mit dem Radkranz (10) stehen, und mit
- zwei Winkelsensoren (S1, S2) zum Erfassen eines jeweiligen Drehwinkels (W1, W2, W3) von einem ersten (Z1) und einem zweiten (Z2) der drei Zahnräder (Z1, Z2, Z3),
**dadurch gekennzeichnet, dass**
- die Messanordnung (1) einen dritten Winkelsensor (S3) zum Erfassen eines dritten Drehwinkels (W3) eines dritten (Z3) der drei Zahnräder (Z1, Z2, Z3) umfasst, und
- jedes der drei Zahnräder (Z1, Z2, Z3) mit unterschiedlicher Zahnanzahl (z1, z2, z3) mit dem Radkranz (10) verzahnt ist
- mit einem Steuergerät (4) nach Anspruch 8.

10. Fahrzeug (3) mit einer Messanordnung (1) nach Anspruch 9.

**Claims**

1. Method for ascertaining a rotational angle (E) of a steering shaft (2), having the steps:

- detecting respective rotational angles (W1, W2, W3) of three toothed gears (Z1, Z2, Z3) of a toothed gear arrangement, wherein the three toothed gears (Z1, Z2, Z3), with different numbers of teeth (z1, z2, z3), are meshed with a gear ring (10) of the steering shaft (2), and
- ascertaining the rotational angle (E) of the steering shaft (2) on the basis of the respective rotational angles (W1, W2, W3) of the three toothed gears (Z1, Z2, Z3) in accordance with a predetermined extraction rule, wherein the rotational angle (E) of the steering shaft (2) is distinctly defined within a predefined angle range by the entirety of the respective rotational angles (W1, W2, W3),

wherein
the predetermined extraction rule comprises that, within the three toothed gears (Z1, Z2, Z3), two different toothed gear pairings (Z1, Z2), (Z1, Z3) are selected (V0), wherein a first toothed gear (Z1) of the three toothed gears (Z1, Z2, Z3) is comprised in both of the two toothed gear pairings (Z1, Z2), (Z1, Z3), and wherein, by means of the respective rotational angle (W1, W2, W3) of the two toothed gear pairings (Z1, Z2), (Z1, Z3), a number (U) of complete revolutions of the first toothed gear (Z1) is distinctly ascertainable in a respective partial angle range,
**characterized in that**

- a first value for the number (U1) of complete revolutions of the first toothed gear (Z1) is ascertained (V1) from the respective rotational angles (W1, W2) of the toothed gears (Z1, Z2) of a first toothed gear pairing (Z1, Z2) of the two toothed gear pairings (Z1, Z2), (Z1, Z3), and
- a second value for the number (U2) of complete revolutions of the first toothed gear (Z1) is ascertained (V2) from the respective rotational angles (W1, W3) of the toothed gears (Z2, Z3) of a second toothed gear pairing (Z1, Z3) of the two toothed gear pairings (Z1, Z2), (Z1, Z3), and wherein
- a first predetermined addition value is added (V6) to the first value (U1) if the first value (U1) is smaller than the second value (U2),

- a second predetermined addition value is added (V5) to the second value (U2) if the second value (U2) is smaller than the first value (U1),
- the respective predetermined addition values are added iteratively to the first value (U1) and the second value (2) until the first value (U1) and the second value (U2) correspond.

2. Method according to Claim 1,
**characterized in that**
the first value (U1) and the second value (U2) for the number of complete revolutions of the first toothed gear (Z1) are ascertained in each case by means of the Nonius principle.

3. Method according to Claim 1,
**characterized in that**
the first and the second predetermined addition value relate to a span of the respective partial angle range within which the number (U) of complete revolutions of the first toothed gear is distinctly ascertainable by means of the first and the second toothed gear pairing (Z1, Z2), (Z1, Z3) respectively.

4. Method according to any of Claims 1 to 3,
**characterized in that**
the first value (U1) and/or the second value (U2) are defined (V7) as the number of complete revolutions of the first toothed gear (Z1) only if the first value (U1) and the second value (U2) correspond.

5. Method according to any of Claims 1 to 4,
**characterized in that**

   - the rotational angle (W1) of the first toothed gear (Z1) and the number (U) of complete revolutions of the first toothed gear (Z1) are combined to give a total angle of the first toothed gear (Z1), and
   - the rotational angle (E) of the steering shaft (2) is ascertained (V8) from the total angle of the first toothed gear (Z1).

6. Method according to any of Claims 1 to 5,
**characterized in that**
that toothed gear which has the smallest number of teeth (z1) of the three toothed gears (Z1, Z2, Z3) is selected as the first toothed gear (Z1).

7. Method according to any of the preceding claims,
**characterized in that**
a plausibility of the rotational angle (E) of the steering shaft (2) is checked by comparing the ascertained rotational angle (E) of the steering shaft (2) with a predefined rotational angle range, wherein the predefined angle range is greater at least by a factor of 2 than the predefined rotational angle range within which the steering shaft (2) is movable.

8. Control unit for ascertaining a rotational angle (E) of a steering shaft (2), which control unit is configured to carry out a method according to any of the preceding claims.

9. Measuring arrangement (1) for ascertaining a rotational angle (E) of a steering shaft (2), having

   - a gear ring (10) which is arrangeable on the steering shaft (2),
   - a toothed gear arrangement comprising three toothed gears (Z1, Z2, Z3) which are mechanically operatively connected with different transmission ratios to the gear ring (10), and having
   - two angle sensors (S1, S2) for detecting a respective rotational angle (W1, W2, W3) of a first (Z1) and a second (Z2) of the three toothed gears (Z1, Z2, Z3), **characterized in that**
   - the measuring arrangement (1) comprises a third angle sensor (S3) for detecting a third rotational angle (W3) of a third (Z3) of the three toothed gears (Z1, Z2, Z3), and
   - each of the three toothed gears (Z1, Z2, Z3), with different numbers of teeth (z1, z2, z3), is meshed with the gear ring (10),
   - having a control unit (4) according to Claim 8.

10. Vehicle (3) having a measuring arrangement (1) according to Claim 9.

**Revendications**

1. Procédé de détermination d'un angle de rotation (E) d'un arbre de direction (2), comprenant les étapes suivantes :

   - la détection des angles de rotation respectifs (W1, W2, W3) de trois roues dentées (Z1, Z2, Z3) d'un agencement de roues dentées, les trois roues dentées (Z1, Z2, Z3) ayant un nombre de dents différent (z1, z2, z3) étant dentées avec une couronne de roue (10) de l'arbre de direction (2), et
   - la détermination de l'angle de rotation (E) de l'arbre de direction (2) à l'aide des angles de rotation respectifs (W1, W2, W3) des trois roues dentées (Z1, Z2, Z3) selon une règle d'extraction prédéterminée, l'angle de rotation (E) de l'arbre de direction (2) étant établi sans équivoque à l'intérieur d'une plage d'angles prédéfinie par l'ensemble des angles de rotation respectifs (W1, W2, W3),

   la règle d'extraction prédéterminée comprenant le fait que, parmi les trois roues dentées (21, Z2, Z3), deux paires de roues dentées différentes (21, Z2), (Z1, Z3) sont sélectionnées (V0), une première roue dentée (21) des trois roues dentées (Z1, Z2, Z3) étant contenue dans les deux des deux paires de roues dentées (21, Z2), (Z1,Z3) et, au moyen des angles de rotation respectifs (W1, W2, W3) des deux paires de roues dentées (21, 22), (Z1, Z3), un nombre (U) de tours complets de la première roue dentée (21) pouvant être déterminé sans équivoque dans une plage d'angles partielle respective,
   **caractérisé en ce que**

   - une première valeur pour le nombre (U1) de tours complets de la première roue dentée (21) est déterminée (V1) à partir des angles de rotation respectifs (W1, W2) des roues dentées (21, Z2) d'une première paire de roues dentées (21, Z2) parmi les deux paires de roues dentées (Z1, Z2), (Z1, Z3), et
   - une deuxième valeur pour le nombre (U2) de tours complets de la première roue dentée (21) est déterminée (V2) à partir des angles de rotation respectifs (W1, W3) des roues dentées (Z2, Z3) d'une deuxième paire de roues dentées (21, Z3) parmi les deux paires de roues dentées (Z1, Z2), (Z1, Z3), et
   - une première valeur d'addition prédéterminée est ajoutée (V6) à la première valeur (U1) si la première valeur (U1) est inférieure à la deuxième valeur (U2),
   - une deuxième valeur d'addition prédéterminée est ajoutée (V5) à la deuxième valeur (U2) si la deuxième valeur (U2) est inférieure à la première valeur (U1),
   - les valeurs d'addition prédéterminées respectives sont ajoutées de manière itérative à la première valeur (U1) et à la deuxième valeur (2) jusqu'à ce que la première valeur (U1) et la deuxième valeur (U2) coïncident.

2. Procédé selon la revendication 1, **caractérisé en ce que** la première valeur (U1) et la deuxième valeur (U2) pour le nombre de tours complets de la première roue dentée (21) sont déterminées respectivement au moyen du principe du vernier.

3. Procédé selon la revendication 1, **caractérisé en ce que** la première et la deuxième valeur d'addition prédéterminée concernent une marge de la plage d'angles partielle respective, à l'intérieur de laquelle le nombre (U) de tours complets de la première roue dentée peut être déterminé sans équivoque avec la première ou la deuxième paire de roues dentées (21, Z2), (Z1, Z3).

4. Procédé selon l'une quelconque des revendications 1 à 3, **caractérisé en ce que** la première valeur (U1) et/ou la deuxième valeur (U2) sont établies (V7) comme le nombre de tours complets de la première roue dentée (21) seulement si la première valeur (U1) et la deuxième valeur (U2) coïncident.

5. Procédé selon l'une quelconque des revendications 1 à 4, **caractérisé en ce que**

   - l'angle de rotation (W1) de la première roue dentée (Z1) et le nombre (U) de tours complets de la première roue dentée (Z1) sont réunis en un angle total de la première roue dentée (Z1), et
   - l'angle de rotation (E) de l'arbre de direction (2) est déterminé (V8) à partir de l'angle total de la première roue dentée (Z1).

6. Procédé selon l'une quelconque des revendications 1 à 5, **caractérisé en ce que** la roue dentée qui présente le plus petit nombre de dents (z1) parmi les trois roues dentées (Z1, Z2, Z3) est choisie comme la première roue dentée (Z1).

7. Procédé selon l'une quelconque des revendications précédentes, **caractérisé en ce qu'**une plausibilité de l'angle de rotation (E) de l'arbre de direction (2) est vérifiée par comparaison de l'angle de rotation (E) déterminé de l'arbre de direction (2) avec une plage d'angles de rotation prédéfinie, la plage d'angles de rotation prédéfinie étant supérieure au moins d'un facteur de 2 à la plage d'angles de rotation prédéfinie à l'intérieur de laquelle l'arbre de direction (2) est mobile.

8. Appareil de commande pour la détermination d'un angle de rotation (E) d'un arbre de direction (2), qui est adapté pour réaliser un procédé selon l'une quelconque des revendications précédentes.

9. Agencement de mesure (1) pour la détermination d'un angle de rotation (E) d'un arbre de direction (2), avec

- une couronne de roue (10) pouvant être agencée sur l'arbre de direction (2),
- un agencement de roues dentées comprenant trois roues dentées (21, Z2, Z3), qui sont en liaison active mécanique avec la couronne de roue (10) avec des rapports différents, et avec
- deux capteurs d'angle (S1, S2) pour la détection d'un angle de rotation respectif (W1, W2, W3) d'une première (Z1) et d'une deuxième (Z2) des trois roues dentées (21, Z2, Z3),

**caractérisé en ce que**

- l'agencement de mesure (1) comprend un troisième capteur d'angle (S3) pour la détection d'un troisième angle de rotation (W3) d'une troisième (Z3) des trois roues dentées (21, Z2, Z3), et
- chacune des trois roues dentées (Z1, Z2, Z3) ayant un nombre de dents différent (z1, z2, z3) est dentée avec la couronne de roue (10)
- avec un dispositif de commande (4) selon la revendication 8.

10. Véhicule (3) avec un agencement de mesure (1) selon la revendication 9.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2697081 A1
- EP 1193472 A2
- DE 19941101 A1
- EP 2743662 A1
- EP 1777484 A2
- EP 2789967 A1
- EP 2259016 A1
- DE 19821467 A1